# EUROPEAN PATENT APPLICATION

(11) **EP 4 722 037 A1**
(43) Date of publication of application: **08.04.2026**
(21) Application number: 24815637.4
(22) Date of filing: 31.05.2024
(51) Int. Cl.: B60N 2/66, A47C 7/02, A47C 7/14, A47C 7/46, B60N 2/02, B60N 2/22, B60N 2/42, B60N 2/64, B60N 2/68

(54) **SEAT STRUCTURE AND TORSION BAR**

(30) Priority: 02.06.2023 JP 2023092002
(71) Applicant: Delta Tooling Co., Ltd., Hiroshima-shi, Hiroshima 736-0084 (JP)
(72) Inventor: HIRAMOTO, Yuta, Hiroshima-shi, Hiroshima 736-0084 (JP); KOJIMA, Shigeyuki, Hiroshima-shi, Hiroshima 736-0084 (JP); NOBUHIRO, Yoshika, Hiroshima-shi, Hiroshima 736-0084 (JP); BABA, Daichi, Hiroshima-shi, Hiroshima 736-0084 (JP); OGURA, Yumi, Hiroshima-shi, Hiroshima 736-0084 (JP); FUJITA, Etsunori, Hiroshima-shi, Hiroshima 736-0084 (JP); YOSHIDA, Seiya, Aki-gun, Hiroshima 735-8501 (JP); MASHINO, Masahiro, Hiroshima-shi, Hiroshima 736-0084 (JP); MAKITA, Soichi, Hiroshima-shi, Hiroshima 736-0084 (JP); KUWATA, Katsuyoshi, Aki-gun, Hiroshima 735-8501 (JP); MOTOIE, Tatsuya, Aki-gun, Hiroshima 735-8501 (JP); USHIO, Nobuhiro, Aki-gun, Hiroshima 735-8501 (JP)
(74) Representative: Hoffmann Eitle
(86) International application number: PCT/JP2024/020127
(87) International publication number: WO 2024/248158

(57) **Abstract**

To improve the stability of a sitting posture by improving the support for the pelvis. A seat structure (1) includes a pelvis support mechanism (4) having a support plate (43) that is biased forward to support the pelvis of the seated person. Since the physiological curvature of the spinal column is easily maintained and the shoulder blades easily come into contact with the upper part of the seat back, it is easy to maintain the sitting posture. The support plate (43) is biased forward and is configured to be displaceable in a rotation direction in a plan view, that is, in a rotation direction around the torso of the seated person. The pelvis and the shoulder blades are prevented from greatly separating from the seat back during riding, thereby enhancing the stability of the posture.

## Description

### Technical Field

The present invention relates to a seat structure suitable for use in vehicles, such as automobiles, aircraft, trains, and ships, and to a torsion bar suitable for use in this seat structure.

### Background Art

In Patent Documents 1 and 2, the present applicant has disclosed a seat structure in which a pelvis support member that comes into contact with the vicinity of the upper part of the pelvis of the seated person is provided in the seat back. This pelvis support member is connected to a torsion bar through link members and is biased forward with a predetermined elastic force. Input vibrations cause the pelvis support member to move back and forth as the seat cushion moves up and down, and since they synergistically work, the pelvis support member easily follows the rotational movement of the pelvis induced by the input vibrations, and thus is highly effective in alleviating the vibrations that people find unpleasant. Further, when an impact force on a predetermined level or higher is input, the pelvis support member is pressed by the pelvis in a backward rotation direction to be displaced such that the pelvis rides on the pelvis support member, thereby absorbing the impact force.

### Prior Art Document

### Patent Document

Patent Document 1: Japanese Patent Application Laid-open No. 2004-209017
Patent Document 2: Japanese Patent Application Laid-open No. 2004-229957
Patent Document 3: Japanese Patent Application Laid-open No. 2011-239910

### Summary of the Invention

### Problems to Be Solved by the Invention

In the seat structures disclosed in Patent Documents 1 and 2, vibration absorption characteristics and shock absorption characteristics are improved using the pelvis support member, and a comfortable ride with small fatigue is achieved. However, the traveling direction of the vehicle, its up-down vibrations caused by bumps and dips in the road surface, and so on complicatedly affect the movement of the seated person in the vehicle. Therefore, the body of the seated person, especially his/her upper body, is affected by input vibrations to move not only in the up-down direction and the front-rear direction, but also in the left-right direction and the rotation direction (yaw direction) around the trunk. However, the pelvis support members disclosed in Patent Documents 1 and 2 cannot sufficiently cope with such movements and still have room for improvement. In addition, since the front edge of the seat cushion comes into contact with the backs of the thighs near the backs of the knees, the front edge of the seat cushion desirably offers certain support while having excellent followability to the movement of the legs without exerting too strong a compression force. From this viewpoint, in Patent Document 3, the present applicant has proposed a mechanism in which a front frame is supported swingably by a torsion bar extending in the left-right direction of the seat cushion. However, because the front frame all along the left-right direction swings back and forth evenly, the movement of one of the left and right legs causes its part supporting the other leg to move in the same way. For example, if one leg moves to sink, the entire front frame sinks, resulting in reduced support for the other leg. Therefore, if the front frame can follow such a movement of each leg independently, it can offer higher support.

In addition, since the torsion bar that elastically supports the pelvis support member or the front frame is incorporated into the seat structure, its breakage needs to be prevented, and the torsion bar was housed in a pipe conventionally, but housing it in the pipe increases the number of parts, hindering weight reduction.

The present invention has been made in consideration of the above, and has an object to provide a seat structure that can offer improved support for the pelvis and the thighs and increase the stability of a sitting posture. Another object is to provide a torsion bar that is suitable for use in the seat structure, has excellent bending properties, and can also contribute to the weight reduction of the seat structure.

### Means for Solving the Problems

To solve the above problems, the present invention provides a seat structure including a seat cushion and a seat back, the seat structure including
a body support mechanism provided in at least one of the seat cushion and the seat back, the body support mechanism including: a support plate whose longitudinal direction is arranged along a left-right direction of the seat cushion or the seat back; and an elastic support mechanism that biases the support plate in such a direction as to bring the support plate closer to a body part of a seated person, and supports the support plate while allowing the support plate to be displaced in a rotation direction around a center position of the elastic support mechanism in terms of the longitudinal direction.

Preferably, the elastic support mechanism includes:
a pair of arm members that are provided on a frame forming the seat cushion or the seat back and are arranged a predetermined interval apart from each other in the left-right direction; and
torsion bars that are used as rotation axes through which bases of the pair of arm members are rotatably supported on the frame, and
tip portions of the pair of arm members are rotatably supported on the support plate.

Preferably, the tip portions of the pair of arm members and the support plate are connected through link plates.

Preferably, the body support mechanism has spring constants k1, k2, and k3 which are found from a load-deflection characteristic that is obtained when the support plate is pressed, where k1 is a spring constant in a displacement range up to an equilibrium point in a seated state, k2 is a spring constant in a predetermined displacement range from the equilibrium point, and k3 is a spring constant in a displacement range beyond the predetermined displacement range from the equilibrium point, the spring constant k2 is the largest among the spring constants k1, k2, and k3, a spring force of the spring constant k2 acts for supporting at the equilibrium point in the seated state, and a spring force of the spring constant k1 or k3 acts when vibration is input.

Preferably, the support plate is formed with end portions thereof in terms of the longitudinal direction located more forward than a middle portion in terms of the longitudinal direction.

Preferably, the body support mechanism is configured as a pelvis support mechanism in which the support plate is disposed at a pelvis corresponding portion of the seat back, and
the support plate constituting the pelvis support mechanism has a lower edge located in a range that is at or lower than at least a position corresponding to an upper part of a sacrum in a pelvis of the seated person and where the lower edge does not come into contact with the seat cushion, and has an upper edge located in a range from a position above at least the position corresponding to the upper part of the sacrum up to a position corresponding to a fourth lumbar vertebra.

Preferably, the body support mechanism is configured as a thigh support mechanism in which the support plate is arranged at a thigh corresponding portion near a front edge of the seat cushion.

Preferably, a seat cushion net is suspended with a predetermined tension across a cushion frame forming the seat cushion, and a seat back net is suspended with a predetermined tension across a back frame forming the seat back.

Preferably, the seat cushion net and the seat back net are each a three-dimensional knitted fabric that is knitted using a multifilament or a monofilament made of a synthetic resin.

Preferably, as the torsion bars, those that have been heat-treated are used, and
the torsion bars are multilayer structures each having:
a hard layer that is provided on a center side of a cross section along a diameter direction orthogonal to the longitudinal direction and is relatively higher in average hardness than other layers; and
a constant-hardness layer having a substantially constant hardness, a soft layer where hardness gradually decreases, and a decarburized layer, the constant-hardness layer, the soft layer, and the decarburized layer being arranged in the order mentioned from the hard layer toward a surface, and
the constant-hardness layer, the soft layer, and the decarburized layer are formed in a ring shape along an outer periphery of the cross section along the diameter direction to surround the hard layer.

Preferably, the hard layer is formed in a range of a 30 to 70% distance of a radius of the torsion bar, from the center of the cross section orthogonal to the longitudinal direction of the torsion bar.

Preferably, the ring of the constant-hardness layer has a width corresponding to 5 to 40% of a radius of the torsion bar, and the ring of the soft layer has a width corresponding to 15 to 60% of the radius of the torsion bar.

Preferably, the ring of the decarburized layer has a width corresponding to 1% or less of a radius of the torsion bar.

Further, the present invention provides a torsion bar that is incorporated in a seat cushion or a seat back of a seat structure and used as a spring member arranged to elastically support the seat cushion or the seat back, the torsion bar
being heat-treated when manufactured, and
being a multilayer structure having:
   a hard layer that is provided on a center side of a cross section along a diameter direction orthogonal to a longitudinal direction and is relatively higher in average hardness than other layers; and
   a constant-hardness layer having a substantially constant hardness, a soft layer where hardness gradually decreases, and a decarburized layer, the constant-hardness layer, the soft layer, and the decarburized layer being arranged in the order mentioned from the hard layer toward a surface, and
   the constant-hardness layer, the soft layer, and the decarburized layer are formed in a ring shape along an outer periphery of the cross section along the diameter direction to surround the hard layer.

Preferably, the hard layer is formed in a range of a 30 to 70% distance of a radius of the torsion bar, from the center of the cross section orthogonal to the longitudinal direction of the torsion bar.

Preferably, the ring of the constant-hardness layer has a width corresponding to 5 to 40% of a radius of the torsion bar, and the ring of the soft layer has a width corresponding to 15 to 60% of the radius of the torsion bar.

Preferably, the ring of the decarburized layer has a width corresponding to 1% or less of a radius of the torsion bar.

### Effect of the Invention

In the seat structure of the present invention, the body support mechanism has the support plate that is arranged with its longitudinal direction along the left-right direction of the seat cushion or the seat back, and is biased in such a direction as to approach the body part of the seated person. This support plate is supported by the elastic support mechanism to be displaceable in the rotation direction around the longitudinal center position. In the case where the body support mechanism is provided as the pelvis support mechanism at the pelvis corresponding portion of the seat back, the physiological curvature of the spinal column is easily maintained, and the shoulder blades easily come into contact with the upper part of the seat back, so that a stable sitting posture is easily maintained. Further, when, in response to the vehicle's movement in the left-right or yaw direction, the trunk moves in the same direction, the support plate follows the movement of the pelvis to move in the same direction. As a result, since the back of the seated person can respond to not only the up-down and front-rear movements but also various vehicle movements, the pelvis and the shoulder blades are prevented from greatly separating from the seat back during riding, leading to improved posture stability, and the effects of vibrations transmitted from the vehicle body to the seated person is reduced, and an increase in sympathetic activity is suppressed, contributing to maintaining a more relaxed riding posture. Further, in the case where the body support mechanism is provided as the thigh support mechanism near the front edge of the seat cushion, its followability to the movement of each leg is increased, resulting in improved thigh support.

Further, having high bending properties, the torsion bar of the present invention need not be housed in a covering pipe as has been conventionally done, but can be placed as it is, contributing to the weight reduction of the seat structure.

### Brief Description of Drawings

[FIGs. 1] FIG. 1(a) is a perspective view illustrating a seat structure according to one embodiment of the present invention, and FIG. 1(b) is a perspective view illustrating its inner structure, with a seat cushion net and a seat back net being removed.
[FIGs. 2] FIG. 2(a) is a perspective view of a pelvis support mechanism used in the embodiment as viewed from a rear direction, and FIG. 2(b) is a rear view of the pelvis support mechanism.
[FIG. 3] FIG. 3 is a view illustrating the movement of the pelvis support mechanism as viewed from the planar direction of the seat structure.
[FIG. 4] FIG. 4 is a graph illustrating a load-deflection characteristic of the pelvis support mechanism.
[FIGs. 5] FIG. 5(a) is a view illustrating the state of a vibration experiment, and FIGs. 5(b), (c) are views illustrating the states of experiments regarding the evaluation of physiological indexes.
[FIG. 6] FIG. 6 is a graph illustrating up-down vibration transmissibility in seat cushions in the vibration experiment.
[FIG. 7] FIG. 7 is a graph illustrating left-right vibration transmissibility in seat backs in the vibration experiment.
[FIG. 8] FIG. 8 is a graph illustrating front-rear vibration transmissibility in the seat backs in the vibration experiment.

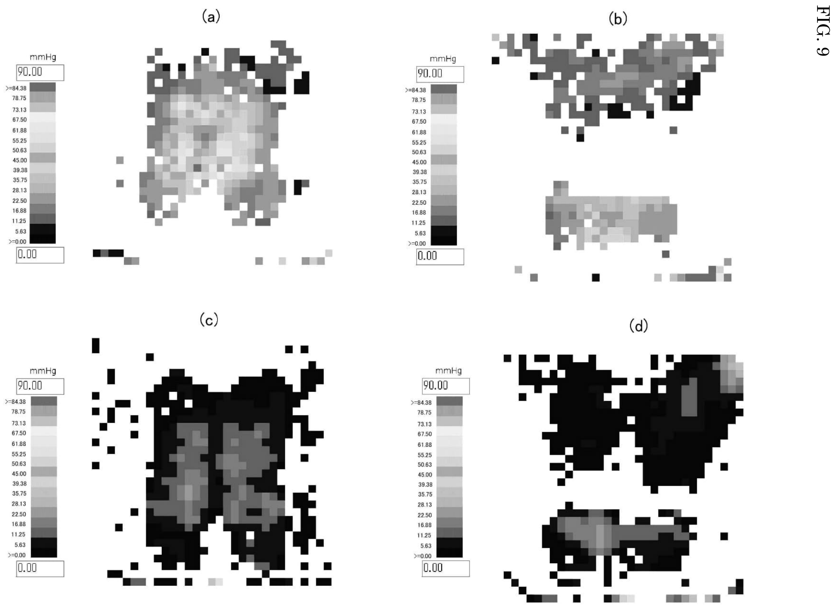

[FIGs. 9] FIG. 9(a) is a view illustrating dynamic body pressure distribution in a seat back of a seat structure of a comparative example when up-down vibration is input at 5 Hz by a single-axis vibration exciter, FIG. 9(b) is a view illustrating dynamic body pressure distribution in a seat back of the seat structure according to the embodiment when up-down vibration is input at 5 Hz by the single-axis vibration exciter, FIG. 9(c) is a view illustrating dynamic body pressure distribution in the seat back of the seat structure of the comparative example when left-right vibration is input at 5 Hz by a 6-axis vibration exciter, and FIG. 9(d) is a view illustrating dynamic body pressure distribution in the seat back of the seat structure according to the embodiment when left-right vibration is input at 5 Hz by the 6-axis vibration exciter.
[FIG. 10] FIG. 10 is a graph illustrating the measurement results of blood pressure and heart rate.
[FIGs. 11] FIGs. 11(a), (b) are graphs illustrating power spectra (logarithmic representation) regarding ECG, PPG, temporal data of APW, dorsal data of APW, lumbar data of APW, and buttocks data of APW, FIG. 11(a) being an analysis graph of the data measured in the seat structure of the comparative example, and FIG. 11(b) being an analysis graph of the data measured in the seat structure according to the embodiment.
[FIGs. 12] FIGs. 12(a), (b) are graphs illustrating time waveforms of ECG, PPG, the left temporal data of APW, the dorsal data of APW, the lumbar data of APW, and the buttocks data of APW, FIG. 12(a) being an analysis graph of the data measured in the seat structure of the comparative example, and FIG. 11(b) being an analysis graph of the data measured in the seat structure according to the embodiment.
[FIG. 13] FIG. 13 is a view for explaining a posture when a human dummy is seated in the seat structure according to the embodiment.
[FIGs. 14] FIGs. 14(a), (b) are views for explaining a method of a fatigue test.
[FIG. 15] FIG. 15 is a graph illustrating hardness distributions in cross sections along the diameter direction when the center positions of torsion bars A, B are set as 0 mm.
[FIGs. 16] FIG. 16(a) illustrates the color-coded hardness distribution in the cross section along the diameter direction of the torsion bar A, and FIG. 16(b) is the color-coded hardness distribution in the cross section along the diameter direction of the torsion bar B.
[FIG. 17] FIG. 17 is a graph illustrating the results of the fatigue test.
[FIG. 18] FIG. 18 is a graph illustrating the results of a bending test under downward movement restriction.
[FIG. 19] FIG. 19 is a graph illustrating the results of a bending test under upward and downward movement restriction.
[FIGs. 20] FIG. 20(a) is a photograph showing the appearance of the torsion bar A having undergone the bending test under upward and downward movement restriction, and FIG. 20(b) is a photograph showing the appearance of the torsion bar B having undergone the bending test under upward and downward movement restriction.
[FIGs. 21] FIGs. 21(a), (b) illustrate the measurement results of spring constants and calculated spring constants for different effective lengths of the torsion bar A, (a) being data when the effective length is 150 mm, and (b) being data when the effective length is 174 mm.
[FIGs. 22] FIG. 22(a) is a scanning electron microscopic photograph showing the state of a fracture surface of the torsion bar A fractured in a torsion test, and FIG. 22(b) is a scanning electron microscopic photograph showing the state of a fracture surface of the torsion bar B fractured in the torsion test.
[FIG. 23] FIG. 23 is a conceptual view illustrating a high-frequency induction heating device that heat-treated the torsion bars used in the experiments.
[FIG. 24] FIG. 24 is a perspective view illustrating the structure of a frame structure of a seat structure according to another embodiment of the present invention.

### Modes for Carrying out the Invention

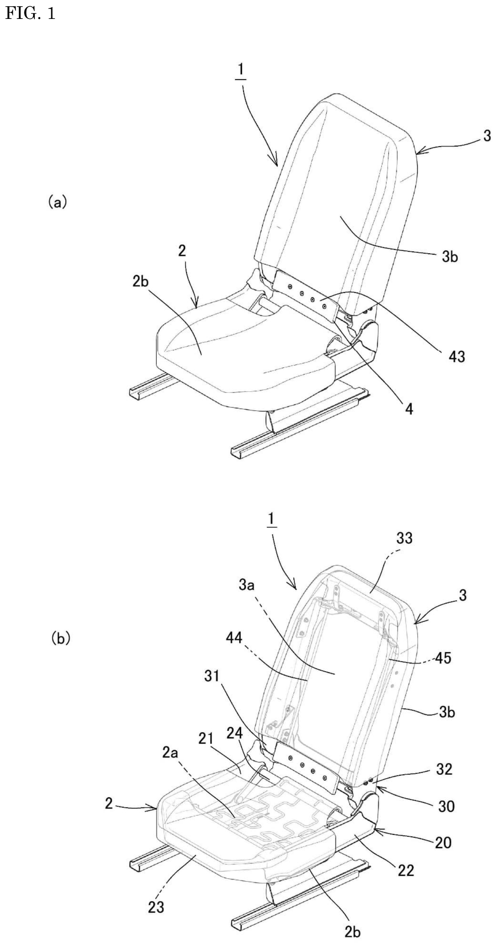

The present invention will be hereinafter described in more detail based on embodiments illustrated in the drawings. As illustrated in FIGs. 1(a), (b), a seat structure 1 of this embodiment has a seat cushion 2, a seat back 3, and so on. This seat structure 1 is an automobile seat, and the seat back 3 is supported to be reclinable relative to the seat cushion 2.

The seat cushion 2 has a cushion frame 20 having a pair of side frames 21, 22 arranged a predetermined interval apart from each other in the left-right direction of the seat structure 1, a front frame 23 arranged between front portions of the pair of side frames 21, 22, and a rear frame 24 arranged between rear portions of the pair of side frames 21, 22. A base net 2a extends between the pair of side frames 21, 22, and a seat cushion net 2b is arranged to cover the upper side of the base net 2a and be suspended over the pair of side frames 21, 22 and the front frame 23. The seat cushion net 2b is suspended across the cushion frame 20 in this manner to be a tension structure arranged with a predetermined tension.

The seat back 3 has a back frame 30 having a pair of side frames 31, 32 arranged a predetermined interval apart from each other in the left-right direction of the seat structure 1, an upper frame 33 arranged between upper portions of the pair of side frames 31, 32, and a lower frame 34 arranged between lower portions of the pair of side frames 31, 32. A base net 3a extends between the pair of side frames 31, 32, and a seat back net 3b is arranged to cover the upper side of the base net 3a and be suspended over the pair of side frames 31, 32 and the upper frame 33. The seat back net 3b is also suspended across the back frame 30 to be a tension structure arranged with a predetermined tension.

As each of the above-mentioned seat cushion net 2b and seat back net 3b, a three-dimensional knitted fabric is preferably used. The three-dimensional knitted fabric is formed of a pair of ground knitted fabrics arranged apart from each other and a connecting yarn connecting them. As ground yarns forming the ground knitted fabrics, those having a thickness that is large enough to impart necessary stiffness to the three-dimensional knitted fabric and that does not make the knitting difficult are selected. Further, as the ground yarns, monofilaments can be used, but from the viewpoint of texture, soft surface feel, and so on, multifilaments can also be used. As the connecting yarn, a multifilament yarn is usable, but a monofilament yarn is preferably used because this imparts the desired elasticity.

Various materials are usable for the yarns forming the ground knitted fabrics or the connecting yarn of the three-dimensional knitted fabric, but they are preferably made of a synthetic resin, and examples of the material include polyester-based fibers represented by polyethylene terephthalate (PET), polybutylene terephthalate (PBT), and the like, polyamide-based fibers represented by nylon 6, nylon 66, and the like, polyolefin-based fibers represented by polyethylene, polypropylene, and the like, and a combination of two kinds or more of these fibers. Owing to such a structure, the three-dimensional knitted fabric has characteristics of high surface rigidity and a low coefficient of friction.

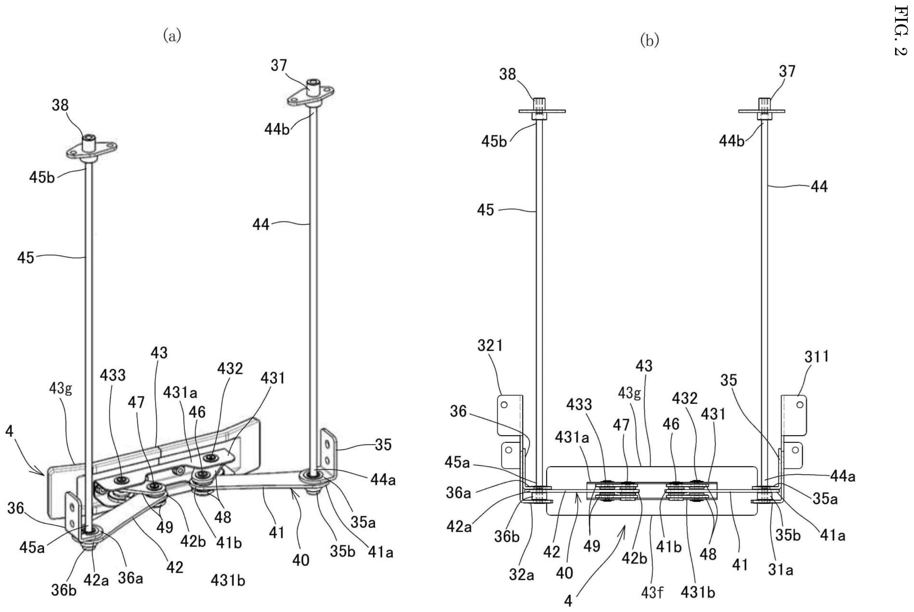

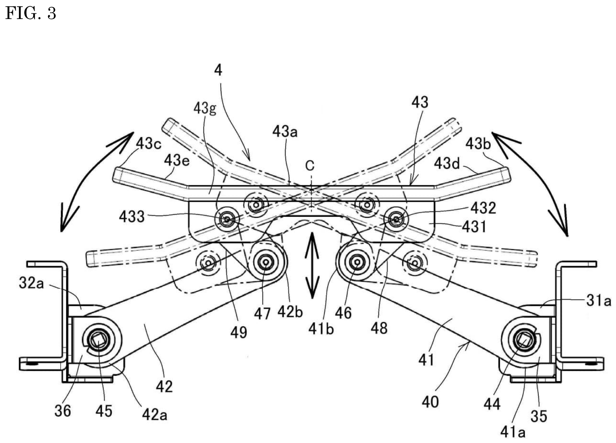

A pelvis support mechanism 4, which is a body support mechanism, is provided while supported by one of the cushion frame 20 forming the seat cushion 2 and the back frame 30 forming the seat back 3. As illustrated in FIGs. 2 and FIG. 3, the pelvis support mechanism 4 has: an elastic support mechanism 40 including a pair of arm members 41, 42, which are arranged a predetermined interval apart from each other in the left-right direction of the seat structure 1, and torsion bars 44, 45; and a support plate 43 supported by the elastic support mechanism 40.

In this embodiment, the pair of arm members 41, 42 is rotatably supported by lower portions of the side frames 31, 32. Specifically, L-shaped brackets 35, 36 are fixed to the inner sides of the lower portions of the side frames 31, 32 with bolts or the like. Connect plates 311, 321 are also fixed to the inner sides of the lower portions of the side brackets 31, 32, in addition to the L-shaped brackets 35, 36. Then, between the L-shaped brackets 35, 36 and bent surfaces 31a, 32a, which are inwardly bent lower portions of the connect plates 311, 322, bases 41a, 42a of the arm members 41, 42 are arranged with bushes 35b, 36b therebetween. Insertion holes are provided in lower surfaces 35a, 36a of the L-shaped brackets 35, 36 and the bases 41a, 42a of the arm members 41, 42, and lower portions 44a, 45a of the torsion bars 44, 45, which are arranged with their longitudinal directions set along the up-down direction, are inserted into these insertion holes unrotatably and are connected to the bushes 35b, 36b. Therefore, the torsion bars 44, 45 function as rotation axes through which the bases 41a, 42a of the arm members 41, 42 are rotatably supported on the lower portions of the side frames 31, 32. Upper portions 44b, 45b of the torsion bars 44, 45 are fixed to appropriate positions of the upper portion of the back frame 30 through fixing bushes 37, 38. Accordingly, when the arm members 41, 42 rotate, the torsion bars 44, 45 rotate together to be twisted, generating torques.

The arm members 41, 42 are arranged with their tip portions 41b, 42b sides directed in the center direction of the seat back 3, and the tip portions 41b, 42b are arranged a predetermined interval apart from each other in the left-right direction of the seat back 3 and supported on the rear side of the support plate 43 through later-described link plates 48, 49. Specifically, the support plate 43 is formed in a substantially rectangular shape and arranged in such a posture that its longitudinal direction is along the left-right direction of the seat back 3 and its width direction is along the up-down direction of the seat back 3. An attachment bracket 431 having a predetermined length along the longitudinal direction of the support plate 43 is fixed to the rear surface of the support plate 43, and near end portions of the attachment bracket 431, portions each with a substantially C-shaped cross section having upper and lower opposing surfaces 431a, 431b are provided. Between the opposing surfaces 431a, 431b, shaft members 432, 433 are arranged. Between the shaft members 432, 433 and connecting shafts 46, 47, which are provided at the tip portions 41b, 42b of the above-mentioned arm members 41, 42, the link plates 48, 49 extend to connect them. Note that the number of the link plates 48 and the number of the link plates 49 are each two on each of the upper side and the lower side, and the tip porions 41b, 42b of the arm members 41, 42 are each arranged therebetween. Consequently, as illustrated in FIG. 3, the support plate 43 is displaceable in the rotation direction around the longitudinal center position C in a plan view (as viewed from above the seat back 3). Therefore, when the position of the pelvis of the seated person moves in the left-right direction or in the rotation direction around the trunk, the support plate 42 follows this movement to try to be displaced in the same direction, and accordingly, the link plates 48, 49 move in the rotation direction.

As illustrated in FIG. 3, in the support plate 43, a middle portion 43a, which is a range with a predetermined length straddling the longitudinal center position C, is formed flat, and on both sides thereof, inclined surfaces 43d, 43e are formed, which are inclined obliquely forward from the boundaries of the middle portion 43a with the predetermined length toward end portionns 43b, 43c, with the end portions 43b, 43c being located more forward than the middle portion 43a, in a plan view of the support plate 43 in the state of being supported by the arm members 41, 42 Consequently, in the support plate 43, the middle portion 43a and the inclined surfaces 43d, 43e form a shape similar to that of the pelvis of the seated person, and it has a large support area. In the case where the support plate 43 is displaced in the above-mentioned rotation direction, when the end portion 43b is displaced forward, the other end portion 43c is displaced rearward, and when the end poriton 43b is displaced rearward, the other end portion 43c is displaced forward, as illustrated in FIG. 3, meaning that the support plate 43 has high followability to the movement of the pelvis, which is a part of the body of the seated person.

As described above, the support plate 43 is arranged with its width direction set along the up-down direction of the seat back 3, and its lower edge 43f is located in a range that is at or lower than a position corresponding to at least the upper part of the sacrum in the pelvis of the seated person and where the lower edge 43f does not come into contact with the seat cushion 2. The position of its upper edge 43g differs depending on the position of the lower edge 43f and the width of the support plate 43 (the length between the lower edge 43f and the upper edge 43g), but it is located in a range from a position at least above the position corresponding to the upper portion of the sacrum up to, preferably, a position corresponding to the fourth lumbar vertebra. Consequently, the support plate 43 can support the pelvis corresponding portion of the seated person. Since the pelvis corresponding portion of the seated person is supported by the support plate 43, his/her spinal column physiologically curves, so that the shoulder blades easily come into contact with the upper portion of the seat back 3, and the seat back 3 serves as a support structure for regions around the pelvis and the shoulder blades. If the position of the upper edge 43g of the support plate 43 is above the position corresponding to the fourth lumbar vertebra, it may be difficult to maintain the physiological curvature of the spinal column, and therefore, the above range is preferable.

As described above, the seat back net 3b is arranged to be suspended over the pair of side frames 31, 32 and the upper frame 33 of the back frame 30, but in FIG. 1(a), the seat back net 3b is cut at the position above the pelvis support mechanism 4 in order to show the pelvis support mechanism 4. However, in the final product, the seat back net 3b is arranged to also cover the front surface of the support plate 43 of the pelvis support mechanism 4, and the cushioning properties of the seat back net 3b alleviate the feeling of contact with the support plate 43. Since the support plate 43 is biased by the torsion bars 44, 45 in such a direction as to protrude forward, its tension acts on the seat back net 3b covering the front surface of the support plate 43, and it also has a function of reducing sagging and wrinkles when the seat back net 3b is suspended across the back frame 30.

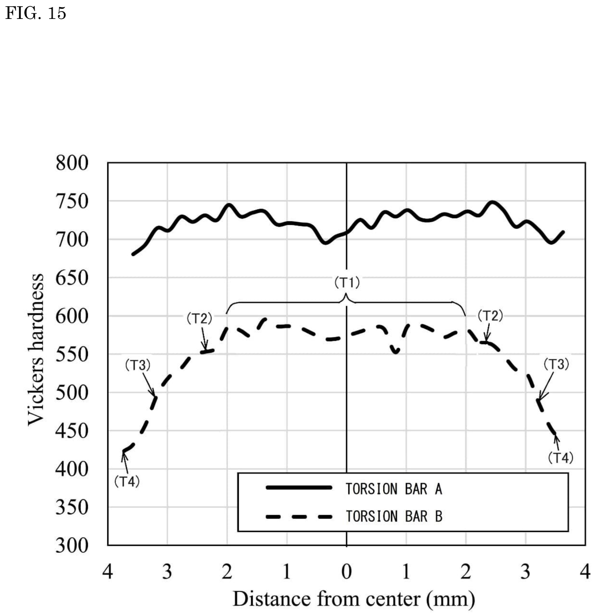

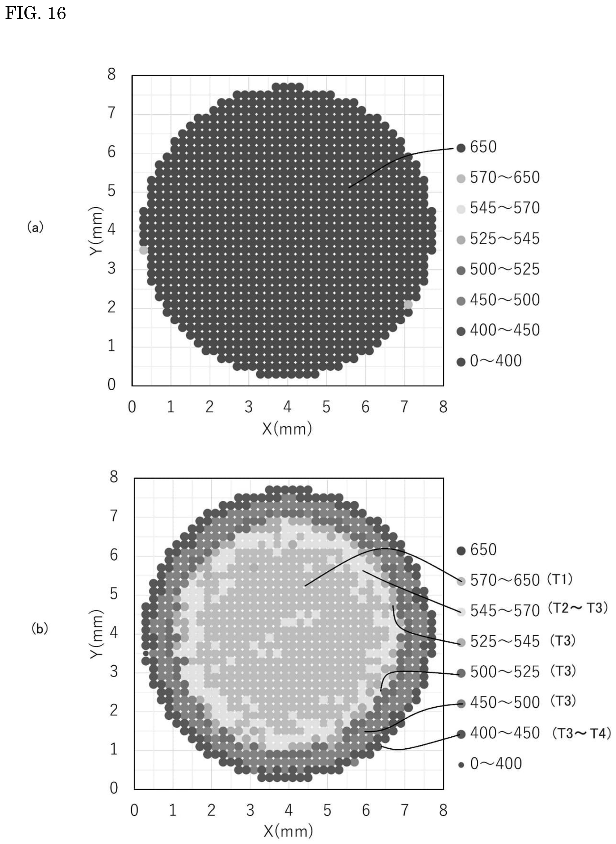

The torsion bars 44, 45 are arranged with their torsion angles adjusted such that in the normal state, the tip portions 41b, 42b sides of the arm members 41, 42 are biased in such a direction as to protrude forward. As the torsion bars 44, 45, heat-treated ones are preferably used. Further, preferably, they each have been quenched and tempered to have the following hardness distribution in their cross sections along the diameter direction orthogonal to the longitudinal direction. Specifically, as illustrated in FIG. 15 and FIG. 16(b), they each have a multilayer structure of totally four layers, in which a hard layer (T1) relatively higher in averange hardness than the other layers is formed on the center side, and a constant-hardness layer (T2), a soft layer (T3), and a decarburized layer (T4) are formed in the order mentioned from the hard layer (T1) toward the surface side. The constant-hardness layer (T2), the soft layer (T3), and the decarburized layer (T4) are formed in a ring shape along the outer periphery of the cross section along the diameter direction, and surround the hard layer (T1).

The hard layer (T1) has a martensite structure and preferably has a Vickers hardness within a range of 550 Hv or more, and more preferably within a range of 570 Hv or more. The hard layer (T1) is preferably formed in a range of a 30 to 70% distance, more preferably a 35 to 65% distance, of the radius of each of the torsion bars 44, 45 from the center of each of the torsion bars 44, 45.

In the present specification, the constant-hardness layer (T2) refers to a range that has a substantially constant hardness, appears as a substantially horizontal change, and has a plateau-like stepped shape between the hard layer (T1) and the soft layer (T3) in the graph in FIG. 15. Since the constant-hardness layer (T2) has a substantially constant hardness, a hardness difference in the range of the constant-hardness layer (T2) falls within 20 Hv, and preferably 10 Hv. The hardness of the constant-hardness layer (T2) is slightly lower than that of the hard layer (T1), and is preferably within a range of 500 to 600 Hv in terms of Vickers hardness. More preferably, it is within a range of 550 to 570 Hv. The ring of the constant-hardness layer (T2) preferably has a width corresponding to 5 to 40%, more preferably 20 to 30%, of the radius of the torsion bars 44, 45. Owing to the presence of such a constant-hardness layer (T2), a compressive residual stress is generated in the torsion bars 44, 45, enabling an improvement in fatigue strength.

The soft layer (T3) is a range where hardness gradually decreases toward the surface side. It is formed such that the hardness gradually decreases, preferably, within a range of 600 to 350 Hv, and more preferably, within a range of 570 to 420 Hv. The ring of the soft layer (T3) preferably has a width corresponding to 15 to 60% of the radius of the torsion bars 44, 45, and more preferably a width corresponding to 45 to 55% thereof. The presence of the ring-shaped soft layer (T3) contributes to durability against torsion and can reduce notch sensitivity to minor scratches and the like on the surface.

The decarburized layer (T4) is a layer formed nearest the surface and having the lowest hardness, and the ring thereof has a width corresponding to 1% or less of the radius of the torsion bar. This layer contributes to an improvement in bending properties, but if its width is too large (if it is formed up to a deep position from the surface), durability is affected, and therefore, its width is preferably within a range of 1 to 10 µm.

Because the constant-hardness layer (T2), the soft layer (T3), and the decarburized layer (T4) are in the ring form to surround the center-side hard layer (T1), the torsion bars 44, 45 of this embodiment have good balance of hardness and the bending properties, can have the desired durability, and are less likely to break when given an impact load.

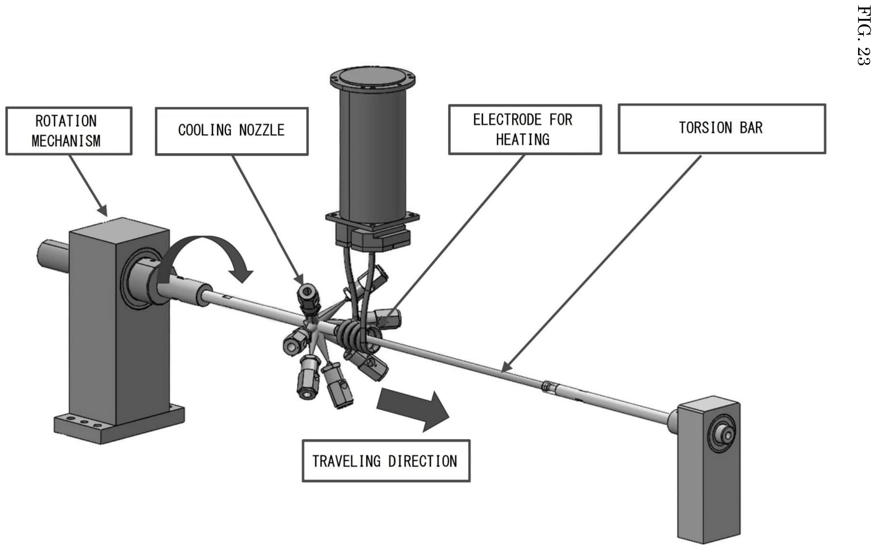

The heat treatment for imparting the above-mentioned characteristics to the torsion bars 44, 45 is performed as follows. The heat treatment is preferably performed by high-frequency induction heating. FIG. 23 illustrates a high-frequency induction heating device used for the heat treatment of torsion bars A, B of later-described experimental examples. When the heat treatment is performed, the torsion bar (work) to be heat-treated is placed in a coil of the high-frequency induction heating device. In the case of torsion bars that are assembled in the seat cushion 2 or the seat back 3 of the automobile seat structure 1 and used as spring members arranged with their one-side ends fixed to the frame of either the seat cushion 2 or the seat back 3, to elastically support the seat cushion 2 or the seat back 3, those having a diameter of about 5 to 20 mm are used. The above-mentioned torsion bars 44, 45 each have a diameter of 7.8 mm. To heat them up to their centers, the frequency at the time of the high-frequency induction heating is preferably 100 kHz or less, more preferably within a range of 10 to 40 kHz, and still more preferably within a range of 20 to 30 kHz.

In the quenching process, after they are first rapidly heated until their temperature becomes higher than the A1 transformation point, they are rapidly cooled. In the tempering process, after they are rapidly heated up to 200 to 400°C, preferably 220 to 350°C, they are rapidly cooled. In both of the processes, the rapid heating is performed at, preferably 300°C/second or more, more preferably 400°C/second or more, and the rapid cooling is performed at, preferably 300°C/second or more, more preferably 800°C/second or more. In particular, the rapid cooling process is performed within one second, preferably, 0.4 to 0.8 seconds. Consequently, the torsion bars 44, 45 with the multilayer structure having the above-mentioned characteristics are obtained, but it is important that the rapid cooling is performed for as short a time as possible without setting the tempering temperature too high.

According to this embodiment, when the person is seated in the seat structure 1, the pelvis presses the support plate 43 of the pelvis support mechanism 4. Since the support plate 43 is biased forward, that is, in such a direction as to be close to the pelvis, which is a part of the body, by the torsion bars 44, 45 through the arm members 41, 42, it presses the pelvis while the person is seated, to support the pelvis. Consequently, the physiological curvature of the spinal column is easily maintained, and the shoulder blades easily come into contact with the upper part of the seat back 3 when the person is seated. As a result, a stable sitting posture is easily maintained, and the transmission of up-down input vibration to the seated person is reduced. Further, in the case where the back of the seated person moves in the left-right direction or in the rotation direction around the trunk, since the support plate 43 can follow this movement (the dashed line in FIG. 3 indicates the movement of the support plate 43), it can keep supporting the pelvis even if such a movement occurs. Therefore, even when input vibration acts in the left-right direction, the transmission of the vibration to the back of the seated person is reduced. When the input vibration acts in the front-rear direction in the seat back 3, the spring force of the torsion bars 44, 45 acts to generate a phase difference, and further an opposite phase, thereby damping the vibration.

Therefore, owing to the presence of the pelvis support mechanism 4 having the above-described structure, the seat structure 1 of this embodiment stabilizes the sitting posture and easily reduces the transmission of input vibration, contributing to increased comfort during riding.

### (Experimental examples)

In the following, regarding the seat structure 1 of this embodiment and a seat structure of a comparative example, a vibration experiment and experiments for the evaluation of body pressure dispersibility and the evaluation of physiological indexes were conducted. As the torsion bars 44, 45, those with a 7.8 mm diameter and a 500 mm length having the four-layer multilayer structure illustrated in FIG. 15 and FIG. 16(b) were used. The seat structure of the comparative example does not include the pelvis support mechanism 4 but includes a lumbar support to support the first lumbar vertebra to the third lumbar vertebra, and has pads disposed on its side portions, and thus side portions are bulged slightly more forward than in the seat structure of this embodiment. This is a structure putting an importance on supporting the sides of the body. The shapes of frames and the other structures including base nets 2a, 3a, a seat cushion net 2b, and a seat back net 3b are the same as those of the seat structure 1 of this embodiment. Subjects are five males in their twenties to sixties.

### (Static load characteristic)

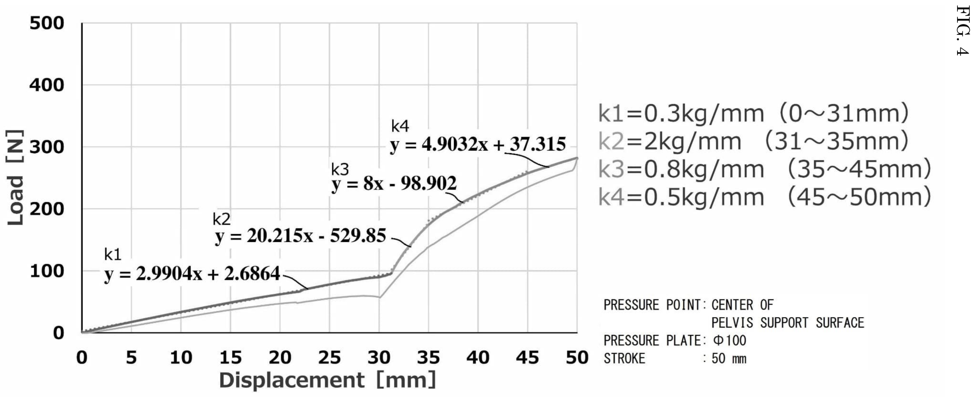

FIG. 4 is a graph illustrating the static load characteristic of the pelvis support mechanism 4. This is a load-deflection characteristic when the center of the support plate 43 of the pelvis support mechanism 4 is pressed by 50 mm with a pressing plate having a 100 mm diameter.

As is seen in FIG. 4, the pelvis support mechanism 4 has four different spring constants k1 to k4. When a load is applied to the seat back 3, before the displacement amount reaches approximately 31 mm (a displacement range up to an equilibrium point from the sitting instant), the spring constant k1: 0.3 kg/mm due to the tension of the seat back net 3b induced by the rearward displacement of the support plate 43 acts. When the displacement amount reaches approximately 31 mm, the spring constant changes from k1 to k2: 2 kg/mm. This is a point at which the arm members 41, 42 are twisted from the state where the support plate 43 has been displaced by the rotation of the link plates 48, 49, and the spring force of the torsion bars 44, 45 starts acting, and a predetermined displacement range where this spring constant k2 acts becomes the equilibrium point in the seated state, so that the back of the seated person is supported.

When the stroke of the support plate 43 of the pelvis support mechanism 4 increases/decreases due to the input vibration, the weight distributions in the seat back net 3b located on the shoulder blades and in the seat cushion net 2b under the buttocks increase. Consequently, the support load of the support plate 43 of the pelvis support mechanism 4 changes, and the spring constant k1: 0.3 kg/mm in a 0 to 31 mm displacement range or the spring constant k3: 0.8 kg/mm in a 35 to 45 mm displacement range acts. Therefore, when the stroke of the support plate 43 of the pelvis support mechanism 4 increases/decreases, it is possible to strengthen the support by the shoulder blades and the buttocks, and on the other hand, the pelvis support mechanism 4 is prevented from giving a strong reaction force, leading to a high effect of inhibiting the posture collaption without reducing a sitting comfort during riding.

### (Vibration experiment)

### •Experimental conditions

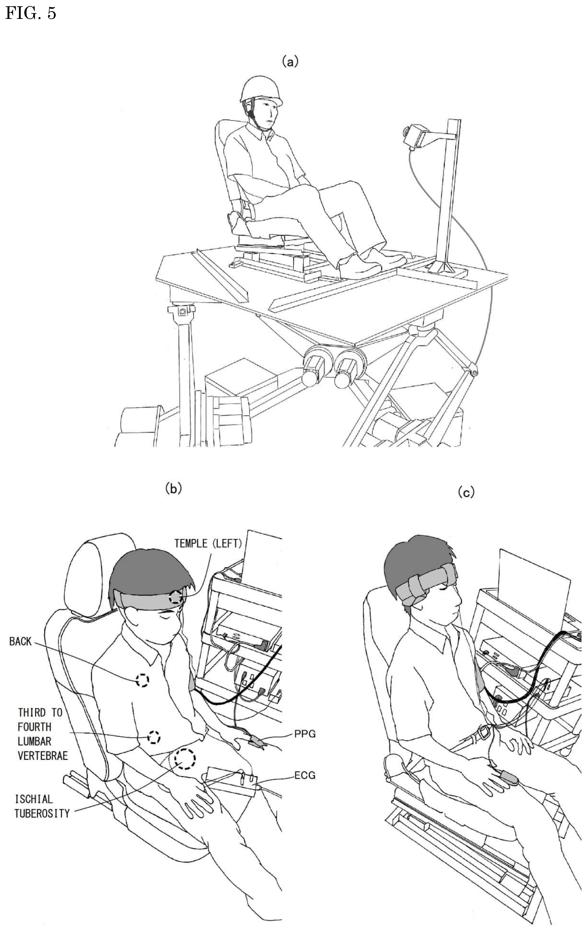

The seat structures were each placed on a vibration exciter, the subject was seated in the seat structures, and vibration transmissibility was measured (see FIG. 5(a)). As the vibration exciter, a single-axis vibration exciter and a 6-axis vibration exciter manufactured by Delta Tooling Co., Ltd. were used. The vibration transmissibility was measured regarding three directions: the up-down direction, the left-right direction, and the front-rear direction. Input vibrations were a sine wave in the up-down direction (log sweep: 0.5 to 15 Hz (single-axis vibration exciter)) whose peak-to-peak displacement was 2 mmp-p, and a sine wave in the left-right direction (log sweep: 0.5 to 6 Hz (6-axis vibration exciter)) whose peak-to-peak displacement was 10 mmp-p. To find the vibration transmissibility regarding the front-rear direction, vibration in the front-rear direction caused by the vibration input in the up-down direction was measured based on acceleration.

As acceleration sensors, Acceleration Pickup PV-62 for seats manufactured by Rion and Acceleration Pickup PV-85 manufactured by Rion were used. One of them was placed at an ischial tuberosity corresponding portion to detect the acceleration in the seat cushion, and the other was placed at a portion corresponding to the united part of the fifth lumbar vertebra and the sacrum, to detect the acceleration in the seat back.

### •Experimental results

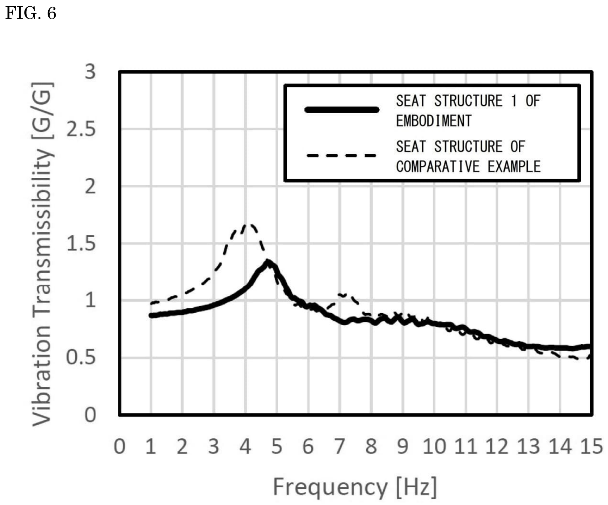

FIG. 6 to FIG. 8 illustrate the experimental results of a male subject (in his thirties) weighing 75 kgf and standing 177 cm when the vibration was input in the up-down direction with the single-axis vibration exciter.

FIG. 6 illustrates vibration transmissibilities based on the up-down vibration acceleration in the seat cushion and the up-down vibration acceleration on a platform of the vibration exciter. The seat structure 1 of this embodiment is lower in acceleration in resonant frequency bands of 1 to 4.5 Hz and 6.5 to 8 Hz than the comparative example, from which it is seen that the seat structure 1 of this embodiment reduces the up-down vibration transmitted from the spinal column to the head and vibration causing the resonance of internal organs.

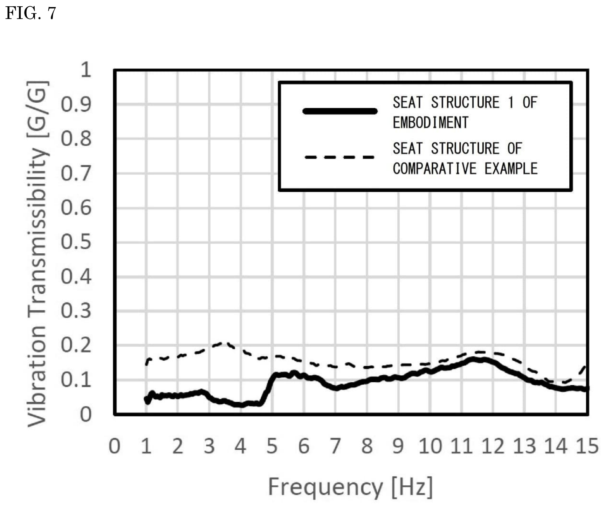

FIG. 7 illustrates vibration transmissibilities based on the left-right vibration acceleration measured in the seat back and the up-down vibration acceleration on the platform of the vibration exciter. In the seat structure 1 of this embodiment, the left-right direction vibration transmissility is greatly improved in the range of 1 to 5 Hz, and the left-right direction vibration transmissibility is also improved in the range of 6 to 8 Hz as compared with the seat structure of the comparative example, which shows that the support plate 43 of the pelvis support mechanism 4 contributes to high followability in the left-right direction and is effective for vibration absorption.

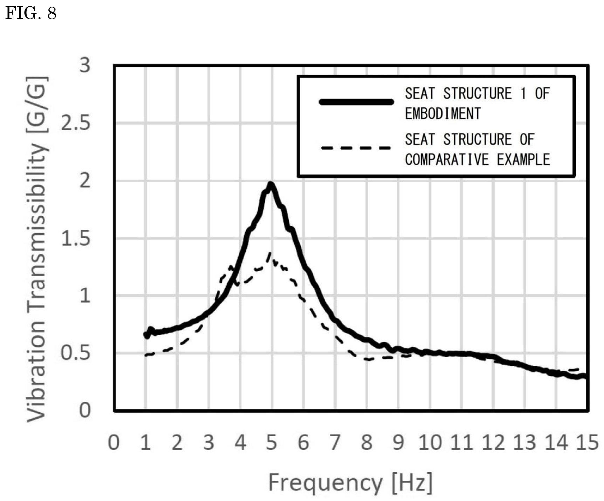

FIG. 8 illustrates vibration transmissibilities based on the front-rear vibration acceleration measured in the seat back and the up-down vibration acceleration on the platform of the vibration exciter. The seat structure 1 of this embodiment is higher in the front-rear acceleration in the 4 to 6 Hz range than the seat structure of the comparative example. This shows that the pelvis support mechanism 4 converts the up-down vibration acceleration to the front-rear vibration acceleration, and this phenomenon contributes to the reduction in the up-down vibration acceleration in the seat cushion illustrated in FIG. 6. In FIG. 8, in the seat structure 1 of this embodiment, the resonant frequency is 5 Hz (gain is 2.0), but a damping region is entered at 6.5 Hz, where the vibration is quickly alleviated by the mass of the trunk and the phase difference (opposite phase). Therefore, the internal organ resonance of 7 Hz does not occur, and owing to the front-rear swinging at 5 Hz or lower, a flurry feeling (front-rear direction) and a bouncy feeling (up-down direction) occurring at 1 to 4 Hz are alleviated. The seat structure 1 of this embodiment uses the three-dimensional knitted fabric as the seat cushion net 2b of the seat cushion 2, and the surface of the three-dimensional knitted fabric has a small friction and easily produces a movement that damps the vibration converted to the front-rear direction due to the phase difference (opposite phase).

### (Evaluation of body pressure dispersibility)

### •Experimental conditions

The following vibrations were input: up-down vibration: a sine wave with a peak-to-peak displacement of 2 mmp-p (3 to 10 Hz vibrations were input in 1 Hz increments (single-axis vibration exciter)); and left-right vibration: a sine wave with a peak-to-peak displacement of 10 mmp-p (3 to 6 Hz vibrations were input in 1 Hz increments (6-axis vibration exciter)), and dynamic body pressure distributions were evaluated. Acceleration sensors were the same and placed at the same positions as in the vibration experiment.

### •Experimental results

FIGs. 9 illustrate the dynamic body pressure distributions when the vibration was excited by 5 Hz vibration (subject: the male in his thirties weighing 75 kgf and standing 177 cm). (a) and (b) are dynamic body pressure distributions when the up-down vibration was input with the single-axis vibration exciter, and (c) and (d) are dynamic body pressure distributions when the left-right vibration was input with the 6-axis vibration accelerator.

In FIGs. 9(a), (c), which are the results in the seat structure of the comparative example, a support pressure in the area from the first lumbar vertebra to the third lumbar vertebra is high. From the comparison of FIG. 9(a) with the dynamic body pressure distribution in the seat structure 1 of this embodiment in FIG. 9(b), it is seen that the peak value of the support pressure in FIG. 9(a) is higher. It is seen that the seat structure 1 of this embodiment in FIGs. 9(b), (d) has high support pressures near the pelvis and the shoulder blades because its pelvis support mechanism 4 supports the vicinity of the fourth lumbar vertebra and the fifth lumbar vertebra.

From these results of the dynamic body pressure distributions, it is seen that, in the seat structure of the comparative example, the load concentrates near the lumbar region, and the pressure value is high at an around 70 mm position from the spinal column, from which it can be said that a back slap, which is a phenomenont that the seat back hits the vicinity of the center of the back, is likely to occur. On the other hand, having the pelvis support mechanism 4, the seat structure 1 of this embodiment has a high support pressure for the sacrum and allows the shoulder blades to easily come into contact with the seat back as described above, and a pressure value at a position 75 mm or more distant from the spinal column is high. Therefore, the seat structure of the comparative example is a structure that causes the erector spinal column muscles to maintain the posture. In contrast, the seat structure 1 of this embodiment is a structure that causes the skeleton to maintain the posture. Further, the seat structure 1 of this embodiment causes only a small displacement of the shoulder blades in response to the input vibration, but since the vibration converted into the front-rear direction acts as shown in the above-described vibration experiment, an inverted pendulum movement, which is front-rear swinging of the pelvis with the shoulder blades as a fulcrum, is likely to occur. The amount of this front-rear swinging is preferably 50 mm at the maximum, and even such a swinging amount enables quick damping owing to the occurrence of the phase difference or opposite phase as described above. This can reduce the up-down acceleration and can also reduce the swinging of the head. Note that friction is preferably made small using the three-dimensional knitted fabric on the surface of the seat cushion net 2b, which makes it possible to easily cause phase control by the phase difference or opposite phase due to the mass of the trunk, in a range between 1 and 5 Hz, and also increase the effect of reducing the up-down acceleration.

### (Evaluation of physiological indexes)

### •Experimental conditions

One male subject in his twenties was seated in the seat structure 1 of this embodiment and the seat structure of the comparative example, and an electrocardiogram (ECG), a finger plethysmogram (PPG), a biological signal (Acoustic Pulse Wave: APW) on the dorsal body surface, brachial blood pressure, and heart rate were measured. FIG. 5(b) illustrates the state when the subject is seated in the seat structure of the comparative example, and FIG. 5(c) illustrates the state when the subject is seated in the seat structure 1 of this embodiment. In FIG. 5(b), the measurement positions of the respective physiological indexes are shown, all of which are positions in a front view of the body. Note that the measurement positions in FIG. 5(c) are also the same as those in FIG. 5(b). APW was measured at four positions: the left temple, the back, the third to fourth lumbar vertebrae, and the ischial tuberosity. ECG, PPG, and APW were continuously measured for six minutes at a sampling frequency of 1000 Hz while the subject was seated in each of the seat structures, and the brachial blood pressure and the heart rate were measured twice before the start of the six-minute continuous measurement and once after the end of the six-minute continuous measurement.

An electrocardiogram sensor used was Vitrode (registered trademark) F150M manufactured by Nihon Kohden Corporation, a finger plethysmogram senso usedr was Finger Clip Probe SR-5C manufactured by Amco Corporation, and an APW sensor used was an acoustic pulse wave detection sensor used in a drowsy driving warning device (Sleep Buster (registered trademark)) manufactured by Delta Tooling Corporation. The data were recorded on LabChart V8 using a high-sensitivity amplifier AB-611J manufactured by Nihon Kohden Corporation and PowerLab (registered trademark) 8/30 (ML870) manufactured by ADI Instruments. The blood pressure and the heart rate were measured using UM211 manufactured by A & D MEDICAL.

### •Experimental results

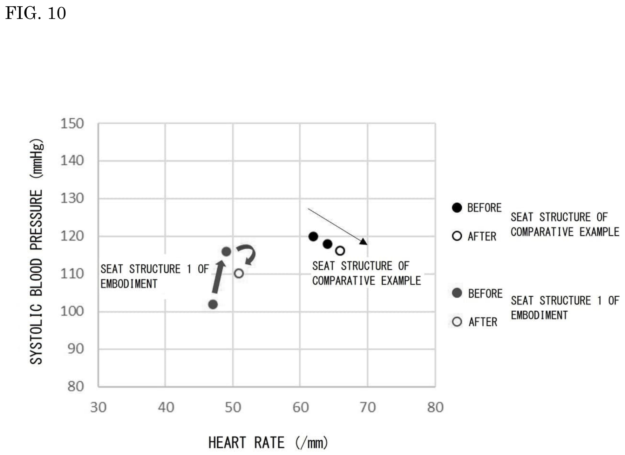

FIG. 10 illustrates fluctuations in systolic blood pressure and heart rate. In the drawing, "before" indicates the data measured before the start of the six-minute continuous measurement of ECC and so on, and "after" indicates the data measured after the end of the six-minute continuous measurement. When the subject was seated in the seat structure of the comparative example, both blood pressure and heart rate were higher than when he was seated in the seat structure 1 of this embodiment.

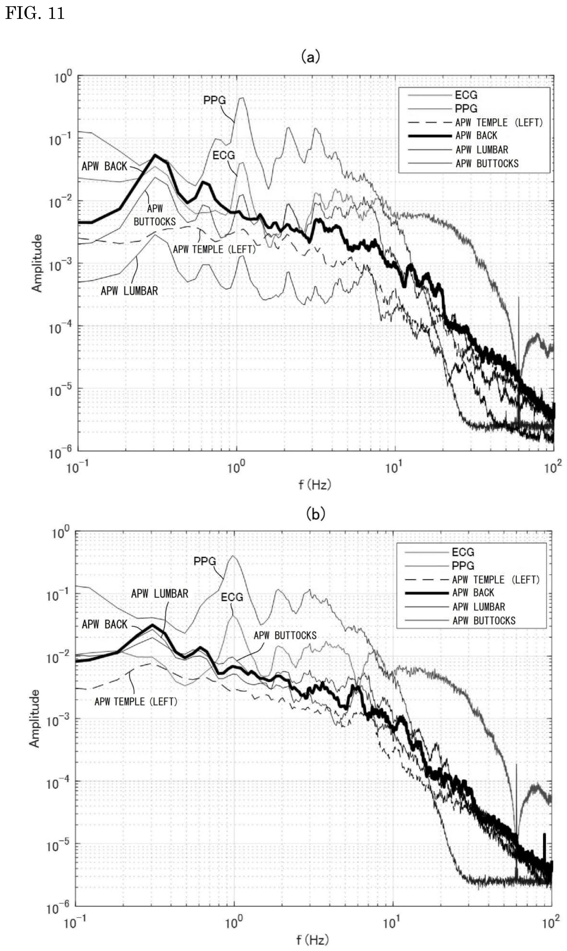

FIGs. 11 are graphs illustrating power spectra (logarithmic representation) regarding ECG, PPG, the temporal data of APW, the dorsal data of APW, the lumbar data of APW, and the buttocks data of APW. ECG, PPG, the left temporal data of APW, and the dorsal data of APW measured in the seat structure of the comparative example in FIG. 11(a) were substantially equivalent to those measured in the seat structure 1 of this embodiment in FIG. 11(b), with little difference therebetween.

In contrast, the lumbar data of APW and the buttocks data of APW measured in the seat structure of the comparative example in FIG. 11(a) and those measured in the seat structure 1 of this embodiment in FIG. 11(b) were noticeably different. In the measurement in the seat structure 1 of this embodiment, the power spectra of the lumbar data of APW and the buttocks data of APW showed roughly similar trends, but in the measurement in the seat structure of the comparative example, the power spectrum measured in the lumbar region was particularly small, indicating poor blood flow and the occurrence of pressure in the lumbar region or buttocks.

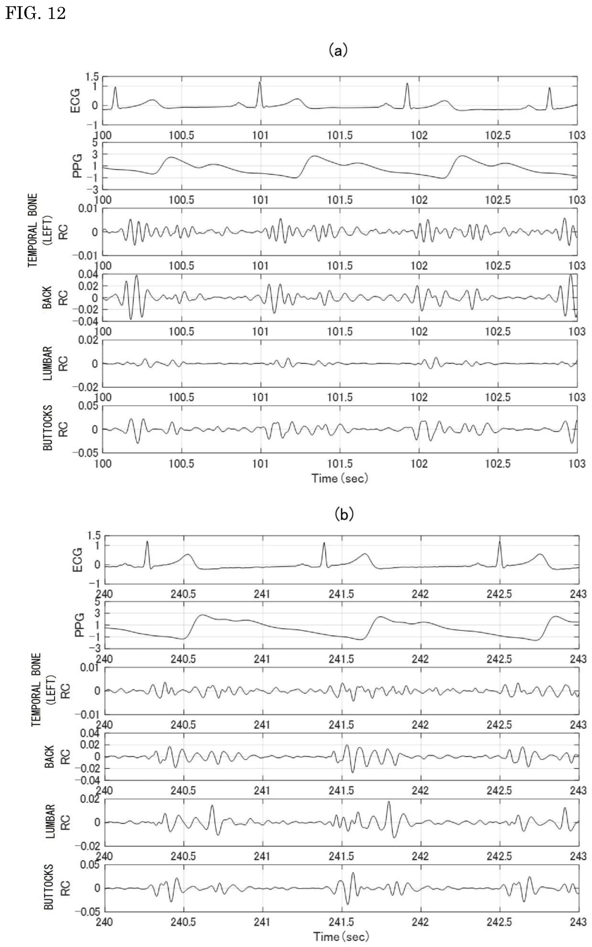

FIGs. 12 illustrate time waveforms of ECG, PPG, the left temporal data of APW, the dorsal data of APW, the lumbar data of APW, and the buttocks data of APW. From the comparison between the time waveforms measured in the seat structure of the comparative example in FIG. 12(a) and those measured in the seat structure 1 of this embodiment in FIG. 12(b), it is seen that there was a large difference in the time waveform of the lumbar data of APW, and the effect of this difference was also reflected in the time waveform of the buttocks data of APW. Specifically, when the measurement was performed in the seat structure 1 of this embodiment, the lumbar data of APW and the buttocks data of APW had almost the same amplitude as those of the left temporal and dorsal data of APW. In contrast, when the measurement was performed in the seat structure of the comparative example, the amplitude of the time waveform of the lumbar data of APW was very small, and the time waveform of the buttocks data of APW also partly had a small amplitude due to this effect. This suggests the possibility that sympathetic activity may be increased and the diameter of blood vessels may be reduced because the seat structure of the comparative example has a stronger support pressure on the lumbar region.

From the above experimental results, it can be said that the data measured when the subject was seated in the seat structure of the comparative example indicates increased sympathetic activity, whereas the data measured when he was seated in the seat structure 1 of this embodiment indicates parasympathetic dominance. This is thought to be associated with the fact that the seat structure of the comparative example has a high support for the lumbar region and the sides of the body, which is likely to cause him to breathe thoracically when he is seated, whereas the seat structure 1 of this embodiment has a high support for the pelvis and the shoulder blades, which is likely to cause him to breathe abdominanally. When the subject's condition was actually visually checked to see whether he was breathing thoracically or abdominally, it was found that the thoracic breathing was dominant when he was seated in the seat structure of the comparative example, and the abdominal breathing was dominant when he was seated in the seat structure 1 of this embodiment. Abdominal breathing stimulates the celiac plexus and alternately tenses the sympathetic nerves and the parasympathetic nerves, and the autonomic nervous control induces parasympathetic dominance even in a state of tension. Therefore, the seat structure 1 of this embodiment is suitable for inhibiting blood flow obstruction in the lumbar region, is suitable for the seated person to assume a posture that accepts circulatory fluctuations in blood flow rate due to increased parasympathetic activity, can easily cope with an increased environmental stress, and is expected to be highly effective in inhibiting the progress of fatigue. Therefore, the increased sympathetic activity and the increased parasympathetic activity are kept in a balanced and antagonistic manner, and a moderate state in which the autonomic nerves are activated is easily maintained. Therefore, the seat structure 1 of this embodiment is suitable as a driver's seat.

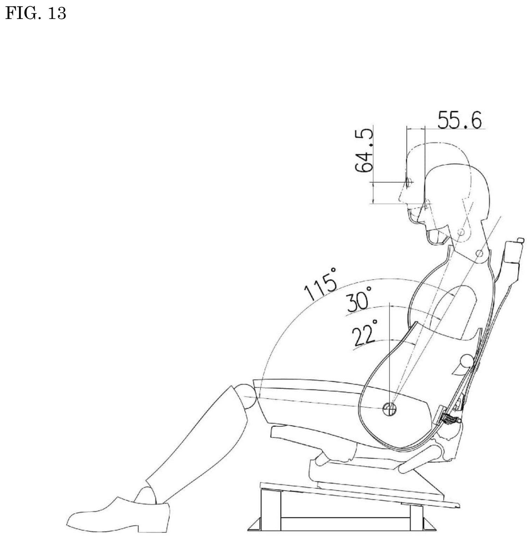

FIG. 13 illustrates a sitting posture of a human dummy set in the seat structure 1 of this embodiment. It also illustrates an imagined position of the human dummy in the seat structure of the comparative example, with its frame aligned in the same position as the frame of the seat structure 1 of this embodiment. Comparing the two showed that the torso angle was 22 degrees in the seat structure of this embodiment, while it was 30 degrees in the seat structure 1 of this embodiment.

In the case of the seat structure 1 of this embodiment, the eye point is more backward by 55.6 mm and more downward by 64.5 mm than in the case of the seat structure of the comparative example. Since the WL direction and the TL direction of the hip point are the same, the difference is due to the difference in the torso angle and the spring structure of the seat back. In the seat structure 1 of this embodiment, the angle between the thigh angle and the torso angle is 115 degrees, which is a layout that facilitates abdominal breathing. In addition, in the seat structure 1 of this embodiment, the seat back 3 is supported by the surfaces of the base net 3a and the seat back net 3b, which are tension structures, and the pelvis support mechanism 4 supports the pelvis. Accordingly, the region between the waist and the chest has a high degree of deformation freedom, that is, a freedom degree of a bending point at the time of a bent posture is high, making it possible to effectively absorb individual differences in physique.

### (Experiment regarding torsion bars)

### •Test materials

A torsion bar whose cross section along the diameter direction almost entirely had a martensite structure (hereinafter, "torsion bar A") and a torsion bar having a multilayer structure in which a hard layer (T1) was formed on the center side of its cross section along the diameter direction, and a constant-hardness layer (T2), a soft layer (T3), and a decarburized layer (T4) were formed in this order toward the surface side (hereinafter, "torsion bar B") were fabricated. Note that the torsion bars A, B both have a diameter of 7.8 mm.

All heat treatments were performed at a frequency of 25 kHz using the high-frequency induction heating device illustrated in FIG. 23. The torsion bar A was rapidly heated for about one second until its temperature reached 900°C and then rapidly cooled for about 0.5 seconds until its temperature reached 200°C or lower so that it would be hardened up to the center. The torsion bar B was hardened under the same conditions as those for the torsion bar A, and then further subjected to low-temperature heat treatment in which it was rapidly heated for about 0.5 seconds until its temperature reached about 260°C, and rapidly cooled for about 0.5 seconds until its temperature reached 200°C or lower.

### •Method of the experiment

### (1-1) Low-load Vickers hardness test

An indenter was pushed in with a test load: HV0.5 (4.903 N), and the diagonal length of an indentation was read for hardness measurement (see JIS Z 2244-1). The measurement was performed from the center as the origin toward the surface.

### (1-2) Fatigue test

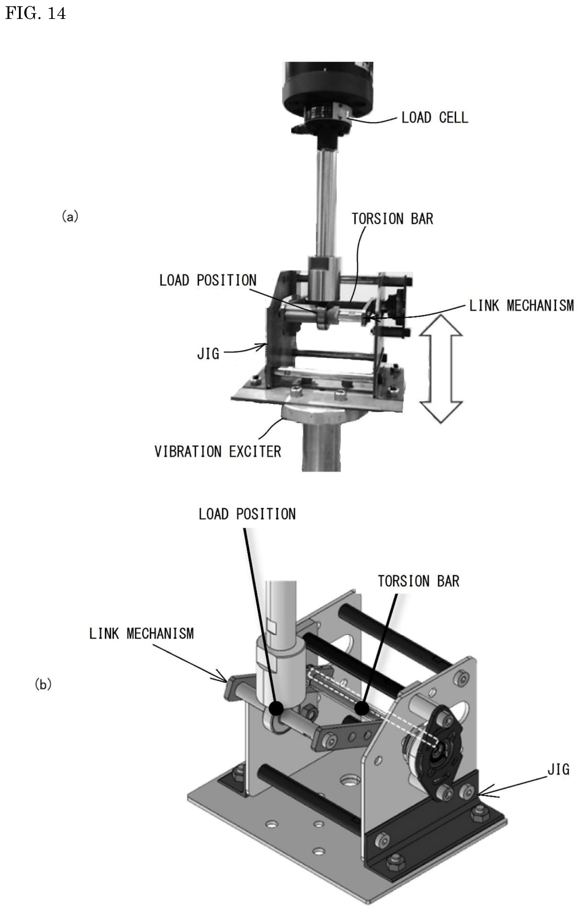

A jig, illustrated in FIG. 14(b), in which the torsion bars A, B, which are the test materials, were each assembled at the rotation center of a link mechanism was placed on a fatigue testing machine (Servopulsa (registered trademark)) manufactured by Shimadzu Corporation illustrated in FIG. 14(a), and the jig was further placed on a vibration exciter. The torsion bars A, B both had an effective length of 150 mm and were assembled with an initial twist of 13.5 degrees. A predetermined position of the link mechanism was set as a load position, a sine wave was applied by the vibration exciter to vibrate the entire jig, and a reaction force at the load position was measured by a load cell.

### (1-3) (Bending test)

Two types of jigs were prepared: a jig having a both-end supported structure restricted from downward movement; and a jig having a both-end supported structure restricted from upward and downward movement by having both ends inserted into bushes. The former had a support span of 100 mm and was given a load at the middle between the supports. The latter was used for two types of torion bars with different effective lengths (150 mm, 174 mm). These two types had a support span of 150 mm and 174 mm, which are the same as the effective lengths, and were each given a load at the middle between the supports, and the measurement was conducted. The shape of the loading jigs was R5 in both cases.

### (1-4) Torsion test

A static torsion test was performed using the jig used in the fatigue test illustrated in FIGs. 14. One-side ends of the torsion bars A, B were fixed, and the other ends were free to rotate. A downward load was applied to the middle of the link mechanism to break them. In order to eliminate the effect of frictional force, a bearing was provided between the load point and the link mechanism.

### (1-5) Observation of fracture surfaces

Fracture surfaces resulting from the fracturing by the torsion test were observed using a scanning electron microscope (SEM) (JSM-7200F manufactured by JOEL Ltd.).

### •Experimental results

### (2-1) Surface hardness comparison

FIG. 15 is a graph illustrating the hardness distributions in the cross sections along the diameter direction when the center positions of the torsion bars A, B are set as 0 mm, and FIGs. 16(a), (b) illustrate the color-coded hardness distributions in the cross sections along the diameter direction. As illustrated in FIG. 15 and FIG. 16(a), in a range of 0.8 mm from the surface of the torsion bar A, a small low-hardness layer is observed, but most of its range had a hardness of 680 Hv to about 700 Hv. A 3 mm radius range from the center was a martensite structure with a hardness of more than about 700 Hv.

As illustrated in FIG. 15 and FIG. 16(b), in the torsion bar B, a substantially circular hard layer (T1) with a diameter of about 4 mm was formed at the center. A ring-shaped constant-hardness layer (T2) with a width of about 1 mm was formed on the outer side of the hard layer (T1), a ring-shaped soft layer (T3) with a width of about 2 mm was formed on the further outer side, and a decarburized layer (T4) with a width of about several µm was formed further outside, and they surrounded the hard layer (T1). With respect to the radius of the torsion bar B, the radius of the hard layer (T1) was about 51%, the width of the constant-hardness layer (T2) was about 25%, the width of the soft layer (T3) was about 51%, and the width of the decarburized layer (T4) was about 0.3% or less. As for the hardness, the hard layer (T1) had about 590 Hv, the constant-hardness layer (T2) had about 550 to 570 Hv, and the soft layer (T3) had about 420 to 570 Hv.

### (2-2) Results of the fatigue test

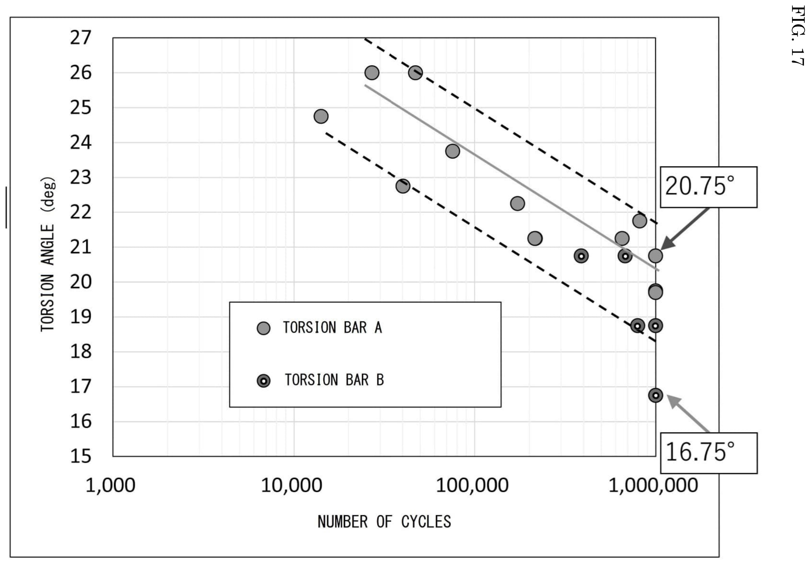

As illustrated in FIG. 17, the torsion bar A achieved one million cycles at a torsion angle of 20.75 degrees, and the torsion bar B achieved one million cycles at a torsion angle of 16.75 degrees. The difference in torsion angle is due to the difference in surface hardness. Note that the torsion angle of the torsion bar B having a 500 mm length is 55.83 degrees.

### (2-3) Results of the bending test under downward movement restriction

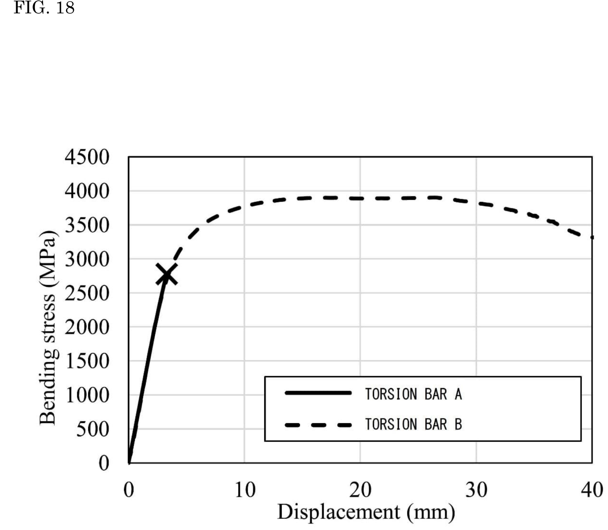

FIG. 18 illustrates the results of the bending test with supported ends and downward movement restriction. The torsion bar A broke at 2750 MPa (elastic range) indicated by the mark "X" in the drawing. The torsion bar B did not break even at 3900 MPa in the test environment.

### (2-4) Results of the bending test under upward and downward movement restriction

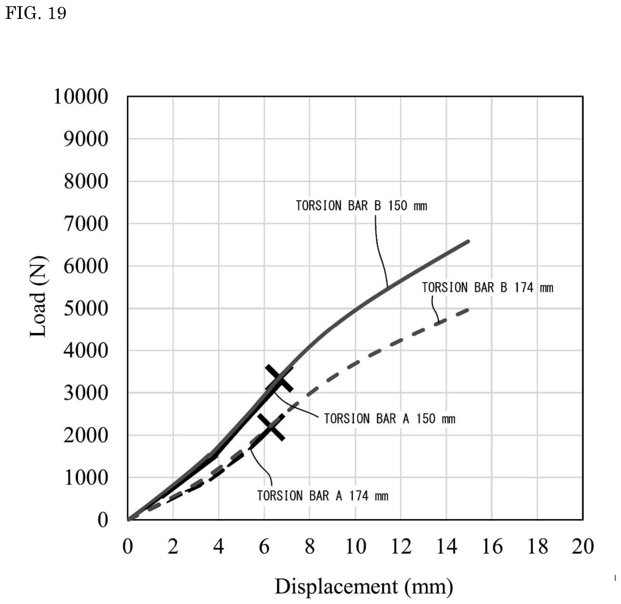

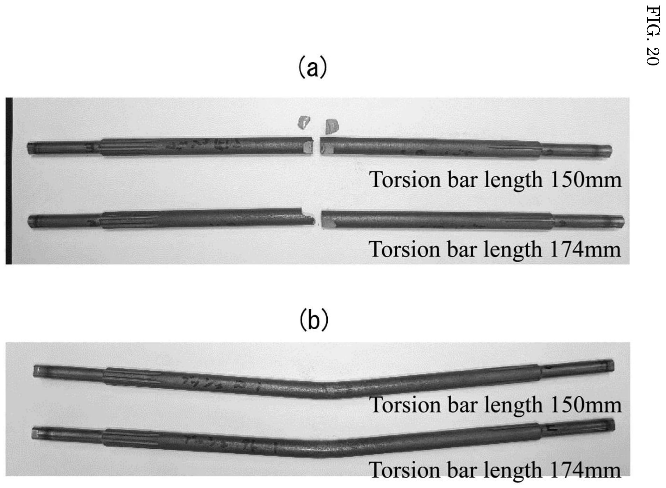

FIG. 19 illustrates the results of the bending test with supported ends and downward movement restriction. The torsion bar A with an effective length of 150 mm broke at 3300 N indicated by the solid-line mark "X", and the torsion bar A with an effective length of 174 mm broke at 2200 N indicated by the broken-line mark "X" (see FIG. 20(a)). In contrast, neither the torsion bar B with an effective length of 150 mm nor the torsion bar B with an effective length of 140 mm broke, as illustrated in FIG. 19 and FIG. 20(b).

### (2-5) Spring constants of the torsion bars with the respective effective lengths

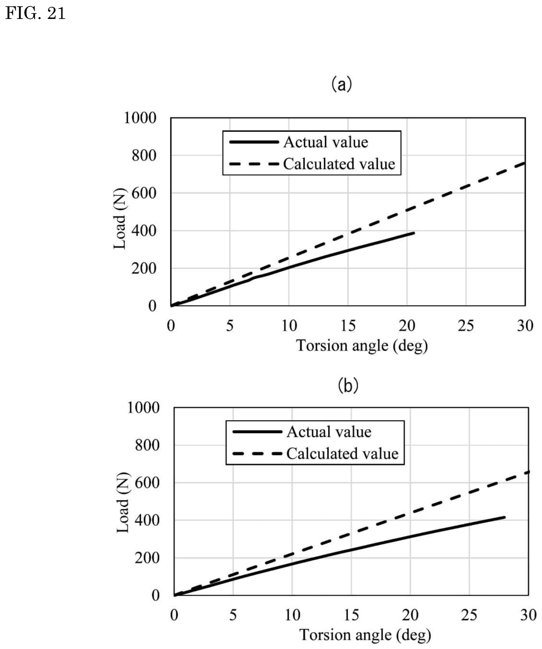

FIGs. 21(a), (b) illustrate the spring constants for the respective effective lengths based on the results of the torsion test. FIG. 21(a) illustrates data in the case where the effective length is 150 mm, and FIG. 21(b) illustrates data in the case where the effective length is 174 mm. The solid lines indicate data actually measured during a period up to breakage, and the broken lines indicate calculated spring constants. These data are calculated to predict durability in conjunction with FIG. 17, and it can be seen from these data that the torsion angle increases as the effective length increases. Note that the torsion bar B presented a similar tendency.

### (Results of the observation of the fracture surfaces in the torsion test)

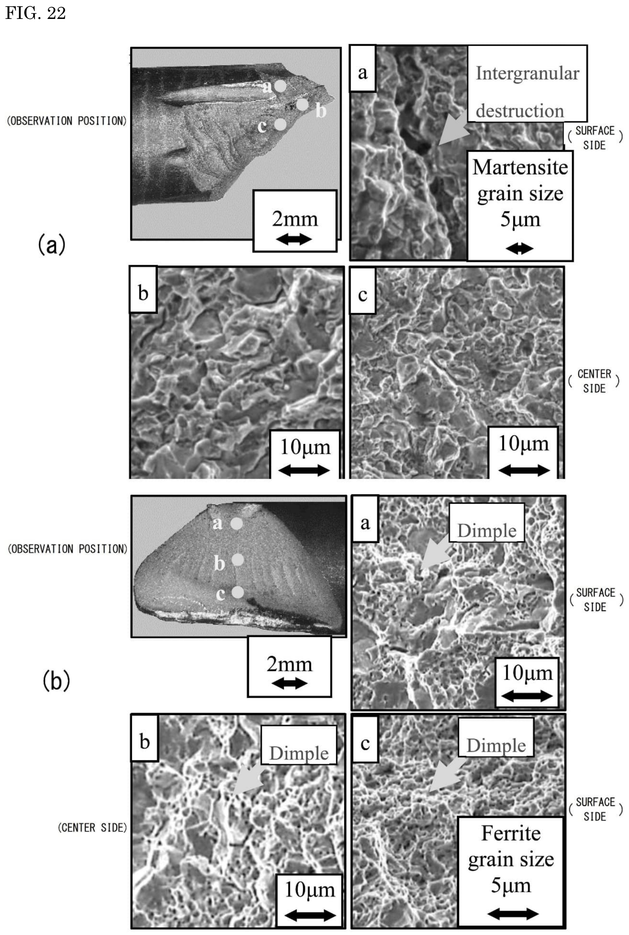

FIG. 22(a) is a photograph of the fracture surface of the torsion bar A with the martensite structure, taken with a scanning electron microscope. a, b, and c shown in the photograph of the fracture surface on the upper left are observation positions, a being a surface-side position, c being a center-side position, and b being a position therebetween. The photograph on the upper right and the two photographs on the lower side are the microscopic photographs at the respective observation positions. In the torsion bar A with the martensite structure, many intergranular destructions are seen near the surface, and dimples can be observed near the center. After brittle destruction occurred on the surface, ductile destruction occurred, resulting in a fracture state similar to that occurring at the time of carburizing and quenching.

FIG. 22(b) is a photograph of the fracture surface of the torsion bar B with the multilayer structure, taken with a scanning electron microscope. a, b, and c shown in the photograph of the fracture surface on the upper left are observation positions, a and c both being surface-side positions and b being a center-side position. The photograph on the upper right and the two photographs on the lower side are the microscopic photographs at the respective observation positions. In the torsion bar B with the multilayer structure having structures different in hardness, the surface layer (especially at position c) was dominated by a fine ferrite structure, while at the center-side position b, a martensite structure was dominant. The areas between b and c and between a and b correspond to the above-mentioned constant-hardness layer (T2) that appears in a plateau-like shape and where the two phases of the ferrite structure and the martensite structure are in balance, and this is the critical phase of the two structures. It is inferred that the presence of the critical phase creates a synergistic effect, resulting in performance similar to that of dual-phase steel. Therefore, dimples caused by the presence of the ferrite structure in the surface layer can also be seen in the intermediate constant-hardness layer (T2) and the central hard layer (T1), which is thought to be the reason why brittle destruction did not occur.

### •Discussion

Out of the above experimental results, those in FIG. 17 and FIGs. 21 have shown that although there is a difference in hardness between the torsion bar A with the martensite structure and the torsion bar B with the multilayer structure, the S-N curves for durability prediction in both cases follow the fifth power law.

Further, the results in FIG. 17 to FIGs. 20 have shown that the torsion bar A, in which only hardness is increased, has sufficient characteristics as a spring, but the torsion bar B not only has the characteristics of a spring but also has a good balance between hardness and bending characteristics, and thus is suitable also as a structural member.

Therefore, as the torsion bars 44, 45 used in the pelvis support mechanism 4, which is the body support mechanism of the above-described embodiments, the torsion bar B with the multilayer structure in the experimental examples is preferably used. The torsion bars 44, 45 in the above-described embodiments are arranged near the side frames 31, 32 of the back frame 30 forming the seat back 3. For this reason, it is important that the torsion bars 44, 45 have high load-bearing strength so as not to easily break when an impact load is input, and it is preferable to use the torsion bar B with the multilayer structure that exhibited high bending characteristics. This eliminates the need to house the torsion bars inside covering pipes as in the past, and they can be arranged as they are, which contributes to the weight reduction of the seat structure 1.

Furthermore, the use of the torsion bar B with the multilayer structure as the torsion bars 44, 45 makes it possible to improve the strength of the seat structure 1 including the back frame 30. As a result, it is possible to contribute also to the weight reduction of the frame materials that constitute the back frame 30 and so on.

The torsion bars that have been subjected to the above-mentioned heat treatment are not limited to those incorporated into the back frame 30 to elastically support the seat back 3, as in the seat structure 1 of the above-described embodiment, but can also be incorporated into the seat cushion 2 of the seat structure 1 and used to elastically support a frame or a cushioning member provided in the seat cushion.

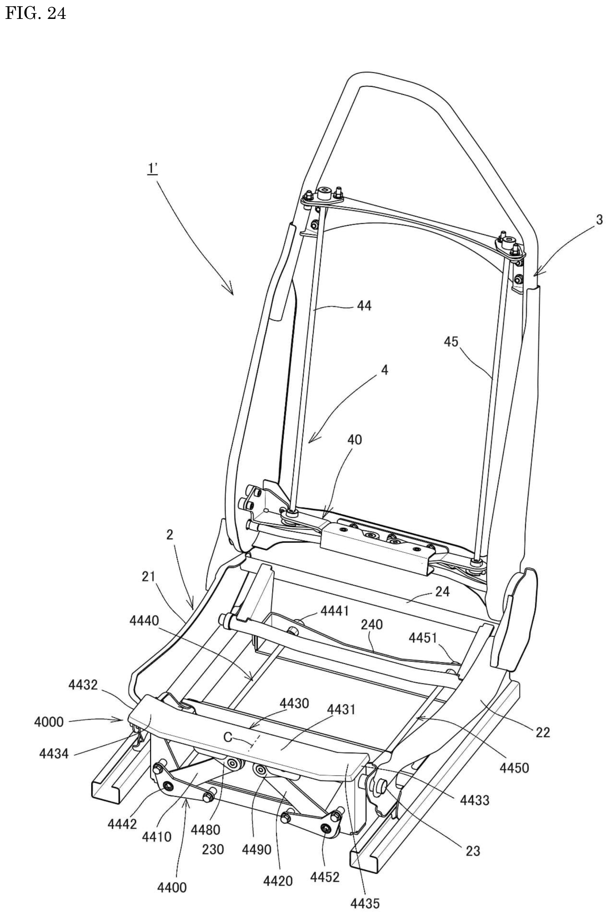

FIG. 24 is a frame structure of a seat structure 1' according to another embodiment of the present invention. In a seat back 3, a pelvis support mechanism 4 having the same structure as that of the above-described embodiment is installed. Further, in a seat cushion 2, a thigh support mechanism 4000, which is a body support mechanism, is provided.

In the seat cushion 2 of this embodiment, a front bracket 230 and a rear bracket 240 are arranged below a front frame 23 and a rear frame 25 respectively, and torsion bars 4440, 4450 constituting an elastic support mechanism 4400 extend along the front-rear direction of the seat cushion 2 between portions, of the front bracket 230 and the rear bracket 240, near side frames 21, 22. The torsion bars 4440, 4450 are arranged, with their rear ends 4441, 4451 being fixed ends and with their front ends 4442, 4452 being movable ends. Bases of arm members 4410, 4420 are connected to the front ends 4442, 4452 respectively, and the arm members 4410, 4420 can rotate in the up-down direction around the torsion bars 4440, 4450 as the rotation axes. The arm members 4410, 4420 are arranged, with their tip portions extending to the center of the front edge of the seat cushion 2, and are rotatably connected to link plates 4480, 4490 similar to those in the above embodiment. The link plates 4480, 4490 are provided on the rear side of a support plate 4430. Therefore, the support plate 4430 is provided at a position corresponding to a range of the thighs near the knees, that is, in a thigh corresponding portion near the front edge of the seat cushion 2.

The support plate 4430 is formed in a roughly rectangular shape and is arranged with its longitudinal direction along the left-right direction of the seat cushion 2 and with its width direction along the front-rear direction of the seat cushion 2. A connecting structure of the arm members 4410, 4420 and the link plates 4480, 4490 is exactly the same as the structure employed in the pelvis support mechanism 4 of the above-described embodiment. Consequently, when the load of the thighs is applied to the support plate 4430 by the sitting action, the support plate 4430 is displaced downward, and the torsion bars 4440, 4450 are twisted through the link plates 4480, 4490 and the arm members 4410, 4420. Consequently, the torsion bars 4440, 4450 bias the support plate 4430 upward, that is, in such a direction that the support plate 4430 approaches the backs of the thighs of the seated person. The elastic force of the torsion bars 4440, 4450 allows the support plate 4430 to follow any posture changes, such as substantially even up-down displacement of the thighs of both legs. As a result, vibration absorption characteristics can be improved, contributing to improved ride comfort.

On the other hand, for example, when the seated person with both knees bent stretches one leg slightly forward, the range of the support plate 4430 corresponding to that leg is pressed downward. As a result, a rotational movement occurs in the support plate 4430 in which its longitudinal ends 4432, 4433 are displaced up and down around the longitudinal center position C. Therefore, the range corresponding to the back of the thigh of the other leg whose knee is kept bent is not displaced downward significantly, and easily remains close to the back of the other thigh. Therefore, the thigh support mechanism of this embodiment can follow various posture changes of the thighs and provide a high support.

As in the above-described embodiment, it is preferable that, in the support plate 4430, a middle portion 4431, which is a range of a predetermined length straddling the central position C in terms of the longitudinal direction, is formed flat, and on both sides thereof, inclined surfaces 4434, 4435 are formed, with their end portions 4432, 4433 being higher than the middle portion 4431. This can suppress left-right positional shifting of the thighs near the backs of the knees, and improves followability because this shape is along the shape of the thighs. Note that the support plate 4430 of this embodiment has the same shape as the shape of the support plate 43 of the above-described embodiment, and it is used with the orientation of its surface facing the body part of the seated person being set different from that of the support plate 43 by about 90 degrees, and its shape can match the shape of the thighs. For example, it is also possible to make the inclination angle of the inclined surfaces 4434, 4435 steeper.

In the embodiment illustrated in FIG. 24, the elastic support mechanisms 40, 4400 are incorporated into the seat back 3 and the seat cushion 2 to be configured as the pelvis support mechanism 4 and the thigh support mechanism 4000 respectively. Therefore, two body support mechanisms are provided, but it is also possible for the mechanism to have only the thigh support mechanism 4000 provided in the seat cushion 2 without having the pelvis support mechanism 4. In this case, the unique advantages of the pelvis support mechanism 4 described in the above embodiment are lost, but it is possible to improve the support for the thighs.

### Explanation of Reference Signs

1, 1' seat structure
2 seat cushion
20 cushion frame
2b seat cushion net
3 seat back
30 back frame
3b seat back net
4 pelvis support mechanism
40 elastic support mechanism
41, 42 arm member
43 support plate
43a middle portion
43b, 43c end portion
43d, 43e inclined surface
43f lower edge
43g upper edge
44, 45 torsion bar
48, 49 link plate
4000 thigh support mechanism
4400 elastic support mechanism
4410, 4420 arm member
4430 support plate
4440, 4450 torsion bar
4480, 4490 link plate

## Claims

1. A seat structure including a seat cushion and a seat back, the seat structure comprising
a body support mechanism provided in at least one of the seat cushion and the seat back, the body support mechanism including: a support plate whose longitudinal direction is arranged along a left-right direction of the seat cushion or the seat back; and an elastic support mechanism that biases the support plate in such a direction as to bring the support plate closer to a body part of a seated person, and supports the support plate while allowing the support plate to be displaced in a rotation direction around a center position of the elastic support mechanism in terms of the longitudinal direction.

2. The seat structure according to claim 1,
wherein the elastic support mechanism includes:
a pair of arm members that are provided on a frame forming the seat cushion or the seat back and are arranged a predetermined interval apart from each other in the left-right direction; and
torsion bars that are used as rotation axes through which bases of the pair of arm members are rotatably supported on the frame, and
wherein tip portions of the pair of arm members are rotatably supported on the support plate.

3. The seat structure according to claim 2, wherein the tip portions of the pair of arm members and the support plate are connected through link plates.

4. The seat structure according to claim 3, wherein the body support mechanism has spring constants k1, k2, and k3 which are found from a load-deflection characteristic obtained when the support plate is pressed, where k1 is a spring constant in a displacement range up to an equilibrium point in a seated state, k2 is a spring constant in a predetermined displacement range from the equilibrium point, and k3 is a spring constant in a displacement range beyond the predetermined displacement range from the equilibrium point, the spring constant k2 is the largest among the spring constants k1, k2, and k3, a spring force of the spring constant k2 acts for supporting at the equilibrium point in the seated state, and a spring force of the spring constant k1 or k3 acts when vibration is input.

5. The seat structure according to claim 1, wherein the support plate is formed with end portions thereof in terms of the longitudinal direction located more forward than a middle portion in terms of the longitudinal direction.

6. The seat structure according to claim 1,
wherein the body support mechanism is a pelvis support mechanism in which the support plate is arranged at a pelvis corresponding portion of the seat back, and
wherein the support plate constituting the pelvis support mechanism has a lower edge located in a range that is at or lower than at least a position corresponding to an upper part of a sacrum in a pelvis of the seated person and where the lower edge does not come into contact with the seat cushion, and has an upper edge located in a range from a position above at least the position corresponding to the upper part of the sacrum up to a position corresponding to a fourth lumbar vertebra.

7. The seat structure according to claim 1, wherein the body support mechanism is a thigh support mechanism in which the support plate is arranged at a thigh corresponding portion near a front edge of the seat cushion.

8. The seat structure according to claim 1,
wherein a seat cushion net is suspended with a predetermined tension across a cushion frame forming the seat cushion, and
wherein a seat back net is suspended with a predetermined tension across a back frame forming the seat back.

9. The seat structure according to claim 8, wherein the seat cushion net and the seat back net are each a three-dimensional knitted fabric that is knitted using a multifilament or a monofilament made of a synthetic resin.

10. The seat structure according to claim 2,
wherein, as the torsion bars, those that have been heat-treated are used,
wherein the torsion bars are multilayer structures each having:
a hard layer that is provided on a center side of a cross section along a diameter direction orthogonal to the longitudinal direction and is relatively higher in average hardness than other layers; and
a constant-hardness layer having a substantially constant hardness, a soft layer where hardness gradually decreases, and a decarburized layer, the constant-hardness layer, the soft layer, and the decarburized layer being arranged in the order mentioned from the hard layer toward a surface, and
wherein the constant-hardness layer, the soft layer, and the decarburized layer are formed in a ring shape along an outer periphery of the cross section along the diameter direction to surround the hard layer.

11. The seat structure according to claim 10, wherein the hard layer is formed in a range of a 30 to 70% distance of a radius of the torsion bar, from the center of the cross section orthogonal to the longitudinal direction of the torsion bar.

12. The seat structure according to claim 10, wherein the ring of the constant-hardness layer has a width corresponding to 5 to 40% of a radius of the torsion bar, and the ring of the soft layer has a width corresponding to 15 to 60% of the radius of the torsion bar.

13. The seat structure according to claim 10, wherein the ring of the decarburized layer has a width corresponding to 1% or less of a radius of the torsion bar.

14. A torsion bar that is incorporated in a seat cushion or a seat back of a seat structure and used as a spring member arranged to elastically support the seat cushion or the seat back, the torsion bar
being heat-treated when manufactured, and
being a multilayer structure having:
a hard layer that is provided on a center side of a cross section along a diameter direction orthogonal to a longitudinal direction and is relatively higher in average hardness than other layers; and
a constant-hardness layer having a substantially constant hardness, a soft layer where hardness gradually decreases, and a decarburized layer, the constant-hardness layer, the soft layer, and the decarburized layer being arranged in the order mentioned from the hard layer toward a surface,
wherein the constant-hardness layer, the soft layer, and the decarburized layer are formed in a ring shape around an outer periphery of the cross section along the diameter direction to surround the hard layer.

15. The torsion bar according to claim 14, wherein the hard layer is formed in a range of a 30 to 70% distance of a radius of the torsion bar, from the center of the cross section orthogonal to the longitudinal direction of the torsion bar.

16. The torsion bar according to claim 14, wherein the ring of the constant-hardness layer has a width corresponding to 5 to 40% of a radius of the torsion bar, and the ring of the soft layer has a width corresponding to 15 to 60% of the radius of the torsion bar.

17. The torsion bar according to claim 14, wherein the ring of the decarburized layer has a width corresponding to 1% or less of a radius of the torsion bar.
